# EUROPEAN PATENT APPLICATION

(11) **EP 2 696 318 A1**
(43) Date of publication of application: **12.02.2014**
(21) Application number: 13170326.6
(22) Date of filing: 03.06.2013
(51) Int. Cl.: G06Q 20/32, G06Q 30/06, G06Q 20/20

(54) **Transaction system and method**

(30) Priority: 09.08.2012 US 201261681390 P; 15.03.2013 US 201313838234
(71) Applicant: NCR Corporation, Duluth, GA 30096 (US)
(72) Inventor: Sandler, Lyle, Morganville, NJ 07751 (US)
(74) Representative: MacLeod, Roderick William

(57) **Abstract**

A transaction system and method in which a customer operates a mobile device (40), such as a smart phone, to select items for purchase. A server (20) maintains a record (24) of the purchases. When the customer has finished shopping, the server (20) sends a code associated with the record (24) to the mobile device (40) and directs the customer to either a full-service or a self-service checkout station for cash payment, or to a quick checkout station (50) for credit or electronic payment. A computer (52) at the checkout station (50) may read the code to obtain the record for an attendant comparison.

## Description

Self-service computer systems have replaced full-service computer systems in many business environments today. For example, self-service computer systems may be found in banking, retail, hospitality, travel, entertainment, medical, and other environments.

One example self-service computer system is disclosed in U.S. Patent No. 5,992,570 of the assignee of the present application. The self-service computer system occupies a self-service checkout lane. A grocery or other store may choose to include a mix of full-service and self-service checkout lanes near store exits. Customers perform tasks at a self-service checkout lane that an assistant might otherwise perform. For example, customers operate barcode readers to scan the items they have selected for purchase, they place the items in bags, and they operate payment devices to pay for the items.

Queues can form at both full-service checkout lanes and self-service checkout lanes, causing customers to become impatient.

Therefore, it would be desirable to provide an alternative transaction system and method that offer customers more choices for checkout.

A transaction system and method is provided.

According to a first aspect of the present invention there is provided a transaction method comprising the steps of: establishing a transaction record for a customer, receiving information about items selected for purchase by the customer from a mobile communication device, such as a smart phone, listing the items in the transaction record, receiving an indication from the mobile communication device when the customer has finished shopping, receiving a customer selection for a payment method from the mobile communication device, and sending a message to the mobile communication device instructing the customer to checkout at a full-service or self-service checkout station, to checkout at a quick checkout station, or leave without stopping at any of the checkout stations based upon the payment method.

The message instructing the customer may also be based upon risk of theft.

The listing of the items in the transaction record may be grouped in accordance with predetermined rules, for example, by bag. The customer organizes the items in a shopping container in accordance with the same rules, that is, items are placed in predetermined bags based upon the rules.

The method may further include sending a code associated with the transaction record to the mobile communication device when the message instructs the customer to stop at one of the checkout stations, receiving the code from a checkout computer at the one checkout station in response to reading of the code by the checkout computer, and sending a list of the items in the transaction record to the checkout computer for an attendant comparison to items in the customer's shopping container.

The present application illustrates a transformed shopping and checkout experience. Rather than considering a single point of contact, such as self-checkout, this experience/platform considers multiple points of contact in and around the store. The fundamental objectives of this platform are to increase shopper and staff efficiencies, lower retailer cost, and improve the fidelity of consumer experiences.

The platform originates at the approach or entry to a store. Shoppers identify themselves using their mobile devices or loyalty cards. The direct effects of this action are that it facilitates delivery of relevant offers during the shopping experience, it connects shoppers to their shopping lists in the cloud, e.g., an in-store server, and it allows the store to measure the risk of theft by an identified shopper; an algorithm will detect anomalies based on normal and historical shopping patterns alerting the store to those anomalies.

After identification, the platform allows shoppers to scan items, in aisle, using their mobile device or a store provided device. Bar codes and photo imaging is used to capture images of products and determine product identification and price information. Photo imaging is used to prevent unnecessary kinetic operations by the shopper as they search for bar codes. In addition, photo imaging will help prevent bar code fraud. A running total of chosen products appears on the mobile device allowing shoppers to track their selections, offers/coupons and running costs.

Bagging during the shopping process is encouraged. The shopping cart is organized to enable an easier "bag as you shop" experience. A modified shopping cart that further encourages organization may be employed.

When shoppers have completed scanning and bagging, they choose checkout. Shoppers are prompted to choose a method of payment, such as cash, credit or virtual wallet. If cash is chosen, the shoppers are directed to a full or self-service station that accepts cash. If shoppers choose credit or virtual wallet, they may be prompted to visit a quick checkout station. A QR code (trade mark) is rendered on the screen of the shoppers' mobile device. The shoppers approach a checkout station, scan the QR code. Low-risk shoppers may be prompted with a message on their mobile devices telling them that their baskets are paid for and a digital receipt is sent to their phone/email accounts.

Several attendants in possession of computers, such as handheld tablets, host the quick checkout stations. Once a shopper chooses checkout/credit, a message is sent to an attendant at a quick checkout station with an inventory of the shopper's purchases. The inventory may be in the form of a data visualization that will easily assist the attendant in determining the legitimacy of the shopping basket contents. If the attendant discovers an inconsistency in the purchases they may approach and perform an audit. The attendant may know which shopper is at a given station as soon as that shopper scans the rendered code on the mobile device. Attendants may also be able to spot items that require approval; such as wine and other products regulated by age. This method allows them to be proactive. In some cases, tags have to be removed or deactivated. Deactivation bins are provided at the quick checkout station. Shoppers simply dip their bags into the bin for deactivation. Otherwise, attendants may proactively deactivate tags.

In some cases where credit or digital wallet is chosen as the payment modality, shoppers may be invited to leave the store without stopping at a checkout station. An example algorithm evaluates the risk associated with shoppers, current queues in the store and the value of the products being purchased.

According to a second aspect of the present invention there is provided a server operable to direct a customer to one of a plurality of different checkout options, the server comprising: a transaction record listing items selected for purchase by the customer as received from a mobile communication device; a price lookup file containing price information for items; a customer profile file containing information about the customer; and transaction software operable to: (i) receive an indication from the mobile communication device when the customer has finished shopping; (ii) receive a customer selection for a payment method from the mobile communication device; and (iii) send a message to the mobile communication device instructing the customer to checkout at one of a plurality of different checkout options based on (a) the type of payment method selected by the customer.

An embodiment of the present invention will now be described, by way of example only, with reference to the accompanying drawings, in which:

Fig. 1 illustrates a block diagram of an example transaction system; and

Fig. 2 illustrates a block diagram of an example server of the transaction system; and

Fig. 3 illustrates a block diagram of an example mobile communication device of the transaction system; and

Fig. 4 illustrates a block diagram of an example quick checkout system of the transaction system.

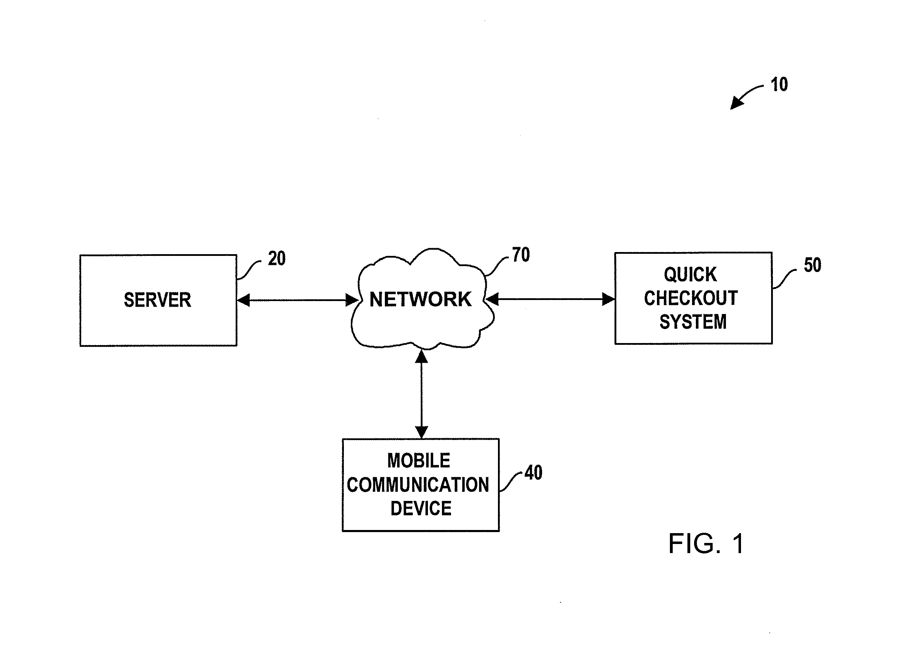

Referring now to Figs. 1-4, an example transaction system 10 is located in a grocery and/or merchandise store. Other venues are also envisioned. Example system 10 primarily includes server 20, mobile communication device 40, and quick checkout system 50.

In this example, a customer operates a mobile communication device 40, such as a smart phone, to select items for purchase. Mobile communication device 40 may be owned and/or provided by the customer, or provided by the store for use during the transaction. The customer captures images of the items, which may include barcodes, using a camera 44 in mobile communication device 40. The customer operates mobile communication device 40 to send messages to server 20 to identify and record the items for purchase. Server 20 maintains a record of the purchases and provides price information for display by mobile communication device 40. When the customer has finished shopping, the customer operates mobile communication device 40 to notify server 20.

Server 20 may direct the customer in several different ways. Server 20 may direct the customer to either a full-service checkout station or a self-service checkout station when the customer elects to pay with cash money (banknotes and/or coins). Server 20 may direct the customer to a quick checkout station when the customer elects to pay by credit, debit or other payment card, or with payment information in the customer's profile 30 or in the customer's digital wallet. Finally, server 20 may allow the customer to leave the store without stopping at any of the above stations when server 20 considers the customer to be a low risk of committing theft and the customer elects to pay with payment information in the customer's profile 30 or in the customer's digital wallet. Regardless, server 20 may send an electronic receipt of the transaction to a customer provided email or other address.

For checkout at a checkout station, server 20 sends a code, such as a QR code, for display by mobile communication device 40. The customer may go to the checkout station where a barcode reader scans the code displayed by mobile communication device 40. An attendant using an attendant computer 52 may compare the contents of the customer's shopping container, for example, by bag or other grouping, to the record of purchases of server 20. The attendant may operate attendant computer 52 to receive a message from server 20 indicating that the transaction is complete. While this method can occur at any type of checkout station, this method is particularly suited for quickly checking out customers through quick checkout stations using quick checkout systems 50.

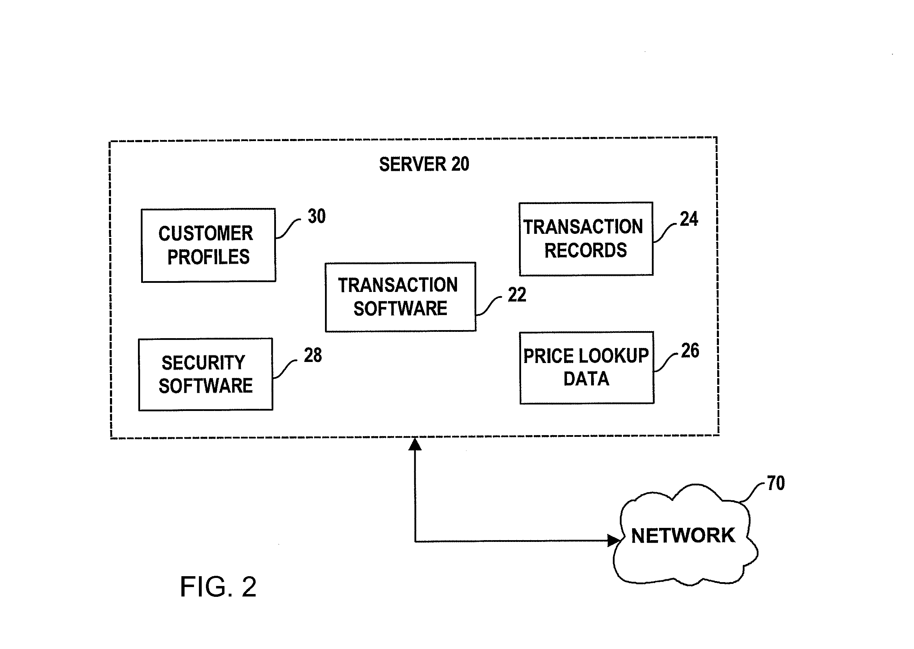

With reference to Fig. 2, server 20 may include one or more processors, memory, program and data storage, a display, and one or more user input devices. Mobile communication device 40 may execute an operating system, such as a Microsoft (trade mark) or Linux (trade mark) operating system. Server 20 additionally includes components and software necessary to accomplish its purpose, such as network circuitry for connecting to network 70.

Server 20 executes transaction software 22, which interacts with mobile communication device 40 via network 70. Transaction software 22 receives a customer request to initiate a transaction with the store from mobile communication device 40.

In the case of a customer-provided mobile communication device 40, transaction software 22 may identify the customer based upon identifying information provided by mobile communication device 40, such as loyalty information. If the customer is a loyalty customer, transaction software 22 compares received loyalty information to customer profiles 30 to identify the customer.

In the case of a store-provided mobile communication device 40, transaction software 22 recognizes mobile communication device 40 from an inventory record of mobile communication devices 40 of the store. The customer may enter identifying information into mobile communication device 40 or swipe a loyalty card when mobile communication device 40 is equipped with a card reader.

Transaction software 22 establishes a current transaction record 24 for a customer using the identifying information. Transaction software 22 may store a shopping list from the customer, payment information from the customer, and/or an electronic address for the customer in transaction record 24.

While the customer shops, transaction software 22 identifies and stores information about items selected for purchase by the customer. Transaction software 22 may receive captured images of the items from mobile communication device 40 and identify the items. For example, transaction software 22 may determine features in the images, such as barcodes, and identify the items from the features. Transaction software 22 may rely on captured images to prevent unnecessary kinetic operations by shoppers as they search for bar codes and to minimize fraud involving substitution of barcodes associated with low-cost items onto high-cost items.

Transaction software 22 stores the item information in transaction record 24. Transaction software 22 may also store item groupings, such as how items should be bagged in a shopping container, based upon predetermined rules for grouping items within a shopping container.

Transaction software 22 provides price data from price lookup file 26 for display by mobile communication device 40. Transaction software 22 may also send coupons, promotions, and other offerings to mobile communication device 40 to enhance the customer's experience.

Transaction software 22 receives a message from mobile communication device 40 when a customer is finished shopping. Transaction software 22 sends a machine readable code, such as a QR code (trade mark) or other 2D barcode, to mobile communication device 40 to be scanned at a checkout location. After the QR code is scanned, transaction software 22 sends an inventory of purchased items to the checkout station. The inventory may include groupings based upon predetermined rules for grouping items within a shopping container. Transaction software 22 may create and/or supplement a shopping history for the customer with current transaction information, which may include updating customer profiles 30 for the customer.

Server 20 may also execute security software 28, which evaluates information from the current transaction and/or prior transactions involving the customer to assign a level of security tailored to the customer. For example, one security level may require that items purchased by the customer be compared by an attendant at any of the checkout locations to the inventory stored by transaction software 22. Another security level may allow the customer to leave without such comparison. In some cases, transaction software 22 may invite a customer to leave the store without stopping at a checkout station. An example algorithm evaluates the risk associated with individual shoppers, current queues in the store and the value of the products being purchased.

Transaction software 22 may accept payment information while the customer is at a checkout station or before the customer reaches the checkout station. When transaction software 22 invites the customer to leave the store without stopping at a checkout station, transaction software 22 considers the transaction to be complete after receipt of payment. Otherwise, when transaction software 22 considers the transaction to be completed following a transaction finished message from an attendant at a checkout station. Regardless, transaction software 22 sends a receipt to an email or other electronic address of the customer, which may be on file in transaction record 24 and/or customer profile 30.

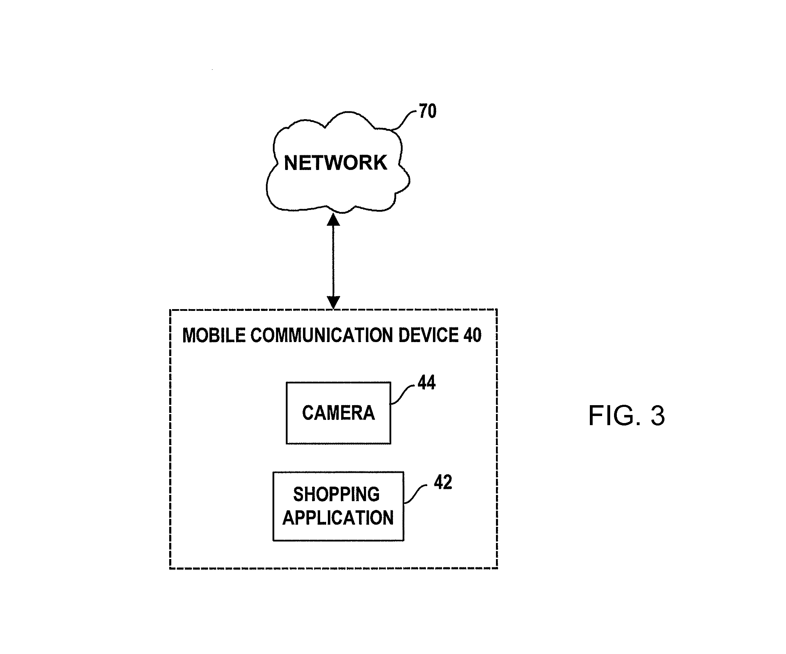

With reference to Fig. 3, mobile communication device 40 includes a processor, memory, and program and data storage. Mobile communication device 40 may execute an operating system, such as a Microsoft (trade mark), Google (trade mark), or Apple (trade mark) operating system. Mobile communication device 40 may execute other computer software that may be stored in a computer readable medium, such as a memory. For example, Mobile communication device 40 may execute web browser software to display web pages from server 20. A customer may operate mobile communication device 40 or a personal or other computer to register with the store as a loyalty customer.

Mobile communication device 40 further includes graphics circuitry for connecting to a display, network circuitry for connecting to network 70, and other circuitry for connecting to other peripherals, such as an input device (e.g., a touch overlay to the display). Store-provided mobile communication devices 40 may also include a card reader.

Mobile communication device 40 may include, but not be limited to, a smart phone, personal digital assistant, or other portable communication device. Mobile communication device 40 may be provided and/or owned by the customer or may be supplied by the store for customer use during shopping.

Mobile communication device 40 may alternatively or in addition download application software from a website of the shopping establishment. For example, financial system 40 may provide shopping application 42 for download from the web site hosted by the store.

In one example embodiment, shopping application 42 may be written in a programming language such as the Java programming and be hosted within the browser software.

As another example, shopping application 42 may include a script, such as JavaScript, combined with hypertext markup language (HTML) or other suitable web page language.

As another example, shopping application 42 may include a software applet written to be executed within the operating system of the smart phone.

A customer executes shopping application 42 to register with server 20, upload a shopping list to server 20, capture images of items to add and/or remove items from the transaction, obtain and display prices of the items from server 20, obtain offerings from server 20, optionally pay for the items, and obtain and display a code for checkout.

Mobile communication device 40 includes a camera 44 for capturing images of items as the customer shops. In one example embodiment, shopping application 42 may send the captured images to server 20 to perform the identification and request an associated price from server 20. In another example embodiment, shopping application 42 may identify the item and request an associated price from server 20. For example, shopping application 42 may decode a barcode on the item and send the item identification information in the barcode with the request for the price.

In an example embodiment, the customer weighs and prices produce items at a produce weighing station in the produce area, which are connected to network 70. The produce weighing station includes a scale. Shopping application 42 sends an image of a produce item to transaction software 22. Transaction software 22 recognizes that the produce item in the image and sends a message to shopping software 42 to display an instruction to the customer to weigh the produce items. Transaction software 22 receives the weight information from the produce station and returns a price to shopping application 42.

In stores without produce weighing stations, transaction software 22 may direct the customer to a full-service checkout station or a self-service checkout station to weigh and price the produce items.

In an example embodiment, shopping application 42 organizes and groups selected items within a shopping container according to predetermined rules. To facilitate grouping of items into different groups, shopping application 42 may also map items to particular bags and determine the number of bags required for a determined method of grouping. Shopping application 42 may pre-establish mappings of items in the shopping list to particular bags and/or bag locations in a shopping container. Shopping application 42 may map selected items that are not in the shopping list to bags according to the rules. For example, shopping application 42 may instruct a customer to place a canned goods item not in the shopping list to a particular bag that contains other cans based upon a rule that requires a certain number of cans be placed in the particular bag.

When the customer is finished shopping, shopping application 42 records a customer selection to finish and checkout. Shopping application 42 records a customer choice for a method of payment. Shopping application 42 sends a message to transaction software 22, and either receives a code from transaction software 22 for display and scanning at a checkout location or an authorization to leave the store without stopping at a checkout station.

A customer may checkout at either a traditional checkout station, such as a full-service or self-service checkout station, or at a quick checkout station where quick checkout system 50 is located. If the customer elects to pay with cash money (coins and/or currency), shopping application 42 directs the customer to a full-service or self-service checkout station where cash money are accepted. If the customer elects to pay with credit or debit card or other payment information on file or otherwise to be digitally provided, shopping application 42 may recommend that the customer proceed to a quick checkout station, or, leave the store without stopping at a checkout station if security software 28 determines that the customer and/or the transaction meet an acceptable risk level.

Shopping application 42 may accept payment information while the customer is at a checkout station or before the customer reaches the checkout station. Mobile communication device 40 may store payment information in a digital wallet. The customer may also use shopping application 42 to store payment information in customer profiles 30. Alternatively, the customer may still pay with cash money or credit card at a full-service or self-service checkout station, or with a credit or debit card at a quick checkout station where quick checkout system 50 is located.

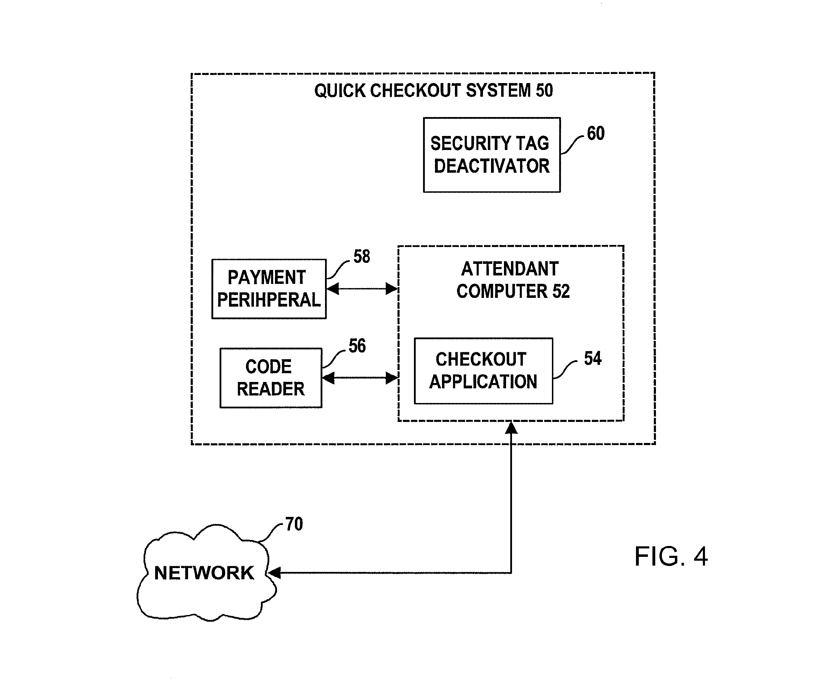

With reference to Fig. 4, quick checkout system 50 at a quick checkout station includes attendant computer 52, code reader 56, and payment peripheral 58. Code reader 52 may include a barcode reader. Payment peripheral 58 may include one or more of a card reader, a keypad for entering personal identification numbers (PINs) during debit card payment, and a near field communications (NFC) reader for wirelessly receiving payment from mobile communication device 40 or NFC-enabled payment cards.

Attendant computer 52 includes a processor, memory, and program and data storage. Attendant computer 52 may execute an operating system, such as a Microsoft, Google, or Apple operating system. Attendant computer 52 may execute other computer software that may be stored in a computer readable medium, such as a memory. For example, attendant computer 52 may execute web browser software to display web pages from server 20.

Attendant computer 52 further includes graphics circuitry for connecting to a display, network circuitry for connecting to network 70, and other circuitry for connecting to other peripherals, such an input device (e.g., a touch overlay to the display) and code reader 56. For example, code reader 56 may include Bluetooth standard circuitry for connecting to corresponding Bluetooth standard circuitry in code reader 56. As another example, code reader 56 and/or payment peripheral 58 may be directly coupled to attendant computer 52 via cable connections.

Attendant computer 52 may include, but not be limited to, a personal computer or a portable computer, such as a tablet computer.

A customer may be directed to a quick checkout station when the customer has selected items for purchase using shopping application 42 and has selected payment by other than cash.

Attendant computer 52 executes checkout application 54, which obtains information in a code displayed by mobile communication device 40 when an attendant operates code reader 56 to read the code, and which uses the information in the code to download from a corresponding transaction record 24 an inventory of items purchased by the customer, including any grouping information. The attendant compares the inventory to the contents of the customer's shopping container.

An attendant may monitor several quick checkout stations. An attendant monitoring several quick checkout stations knows which shopper is at a given station as soon as that shopper scans the rendered code on the mobile device.

Checkout application 54 may additionally download security level information from customer profile 30. The attendant may consider the security level in deciding how extensive the comparison of the inventory to the contents of the customer's shopping container should be.

The attendant may consider the security level when evaluating a customer's purchases. For example, the attendant may compare the contents of one or more bags to the corresponding inventory. As another example, the attendant may decide based upon a low security level that no inspection is necessary.

Checkout application 54 may also accept payment. For example, checkout application 54 may operate payment peripheral 58 to accept payment via credit or debit card. Checkout application 54 may also accept payment information stored within customer profile 30 or within a digital wallet of mobile communication device 40.

After processing of payment, checkout application 54 may receive a response from transaction software 22 and display a corresponding indication that payment has been accepted and the transaction is finished.

Checkout station may further include security tag deactivator 60. In one example embodiment, security tag deactivator 60 may be in the form of a bin with an opening for placing a bag in the bin. Security tag deactivator 60 deactivates security tags on all items in the bag. During shopping, shopping application 42 may display a message directing that items with security tags be located together in a common bag, in accordance with the predetermined grouping rules. When the transaction is finished, shopping application 42 may display a message reminding the customer to place the particular bag with security tags into security tag deactivator 60.

In one example embodiment, checkout application 54 may be written in a programming language such as the Java programming and be hosted within the browser software.

As another example, checkout application 54 may include a script, such as JavaScript, combined with hypertext markup language (HTML) or other suitable web page language.

In some embodiments, the server may authorize the customer to leave without stopping at the checkout station when the risk of theft is low and the customer elects to pay using electronic payment. Regardless, the server may send an electronic receipt of the transaction to an email or other address provided by the customer.

Although the present invention has been described with particular reference to certain preferred embodiments thereof, variations and modifications of the present invention can be effected within the scope of the following claims.

## Claims

1. A transaction method comprising:
establishing a transaction record (24) for a customer;
receiving information about items selected for purchase by the customer from a mobile communication device (40);
listing the items in the transaction record (24);
receiving an indication from the mobile communication device (40) when the customer has finished shopping;
receiving a customer selection for a payment method from the mobile communication device (40); and
sending a message to the mobile communication device (40) instructing the customer to checkout at a full-service or self-service checkout station, to checkout at a quick checkout station (50), or leave without stopping at any of the checkout stations based upon the payment method.

2. The method of claim 1, further comprising:
sending a code associated with the transaction record (24) to the mobile communication device (40) when the message instructs the customer to stop at one of the checkout stations;
receiving the code from a checkout computer at the one checkout station in response to reading of the code by the checkout computer; and
sending a list of the items in the transaction record to the checkout computer.

3. The method of claim 1 or 2, wherein the message is based upon a risk of theft.

4. The method of any preceding claim, further comprising:
grouping the items in the transaction record.

5. A server (20) operable to direct a customer to one of a plurality of different checkout options, the server (20) comprising:
a transaction record (24) listing items selected for purchase by the customer as received from a mobile communication device (40);
a price lookup file (26) containing price information for items;
a customer profile file (30) containing information about the customer; and
transaction software (22) operable to: (i) receive an indication from the mobile communication device (40) when the customer has finished shopping; (ii) receive a customer selection for a payment method from the mobile communication device (40); and (iii) send a message to the mobile communication device (40) instructing the customer to checkout at one of a plurality of different checkout options based on (a) the type of payment method selected by the customer

6. A server (20) according to claim 5, wherein when the transaction software (22) instructs the customer to checkout at one of a plurality of different checkout options, the decision is also based on (b) a calculated risk of theft for that customer as a result of the customer profile file (30) for that customer.

7. A server (20) according to claim 6, wherein when the calculated risk of theft is based on a comparison of normal and historical shopping patterns for that customer.
